# EUROPÄISCHE PATENTSCHRIFT

(11) **EP 2 369 215 B1**
(45) Veröffentlichungstag und Bekanntmachung des Hinweises auf die Patenterteilung: **16.04.2014**
(21) Anmeldenummer: 10195369.3
(22) Anmeldetag: 16.12.2010
(51) Int. Cl.: F16L 37/24

(54) **Steckverbindung**
Connector
Connecteur à fiches

(30) Priorität: 27.03.2010 DE 102010013159
(43) Veröffentlichungstag der Anmeldung: 28.09.2011
(73) Patentinhaber: VAG-Armaturen GmbH, 68305 Mannheim (DE)
(72) Erfinder: Hauner, Ivo, 69602 Ratiskovice (CZ)
(74) Vertreter: Charrier, Rapp & Liebau

(56) Entgegenhaltungen:
- DE-A1-102004 055 409
- GB-A- 2 223 814
- US-A- 966 925
- US-A- 1 673 338
- US-A- 1 851 992
- US-A- 2 496 928
- US-A- 3 162 470
- US-A- 5 253 716

## Beschreibung

Die Erfindung betrifft eine Steckverbindung nach dem Oberbegriff des Anspruchs 1.

Eine derartige Steckverbindung ist aus der US 3,162,470 bekannt. Dort wird eine Hochdruckkupplung zwischen einem ersten Anschlussteil und einem zweiten Anschlussteil über einen gesonderten Verriegelungsring erreicht. Der mit dem ersten Anschlussteil verbundene Verriegelungsring weist nach innen vorstehende Verriegelungsstege zum Eingriff mit nach außen vorstehenden Verriegelungsnocken am zweiten Anschlussteil auf. Zusätzlich ist ein Sicherungsring mit einem Sicherungssteg vorgesehen, der die durch den Verriegelungsring und das zweite Anschlussteil gebildete Bajonettverbindung blockiert und somit ein ungewolltes Lösen der Verbindung verhindert. Zur drehsicheren Arretierung des Sicherungsrings sind zusätzliche Sicherungselemente in Form von Schrauben notwendig, welche nach dem Zusammenbau der Steckverbindung angebracht werden müssen.

Aus der GB 2 223 814 A ist ebenfalls eine Steckverbindung bekannt, bei welcher der Bajonettverschluss über einen Verriegelungsring gesichert wird. Eine Feder drückt dabei den Verriegelungsring in Richtung des Bajonettverschlusses, so dass an dem Verriegelungsring angebrachte Sicherungsstege in den Verschluss eingreifen und ein Lösen der Verbindung verhindern.

Die US 1,673,338 A offenbart eine Rohrkupplung, bei der ein erstes Rohrteil über ein Gewinde in ein zweites Rohrteil eingeschraubt und über einen Verriegelungsring gehalten wird. Der Verriegelungsring ist über Stifte mit einem Gewindeabschnitt verbunden. Durch Drehen an dem Verriegelungsring wird die Gewindeverbindung gefügt bis ein Sicherungssteg an dem Verriegelungsring in einer Aufnahme einer Steckerseite arretiert. Eine Feder spannt den Verriegelungsring mit dem Sicherungssteg in Richtung der steckerseitigen Aufnahme vor, so dass ein unbeabsichtigtes Lösen der Steckverbindung verhindert wird.

Eine weitere Steckverbindung ist aus US 966,925 bekannt. Dort blockiert ein federvorgespanntes Element in der Aufnahme des Bajonett-Verschlusses das Öffnen des Verschlusses. Um die Verbindung dennoch zu lösen, muss das Element entgegen der Federvorspannung aus der Aufnahme des Bajonett-Verschlusses bewegt werden.

Eine Steckverbindung eines Fittings mit einer Anbohrschelle ist aus der DE 20 2007 016 485 U1 bekannt. Dort wird zwischen einen Abgang der Anbohrschelle und eine Schulter des über eine Bajonettverbindung mit der Anbohrschelle lösbar verbindbaren Fittings ein als offener und schließbarer Ring aus einem starren Material hergestellter und im geschlossenen Zustand radial vorgespannter Sicherungsring eingesetzt. Bei der Verbindung des Fittings mit der Anbohrschelle muss das Fitting zunächst ohne den Sicherungsring mit einem Anschlussvorsprung in eine Radialnut des Abgangs eingeführt und nach einer Drehung wieder ein Stück herausgezogen werden. Dabei entsteht zwischen dem Stirnende des Abgangs und der Schulter des Fittings eine Lücke, in die der verschließbare Sicherungsring eingesetzt wird. An den Enden des Sicherungsrings ist ein Rastverschluss vorgesehen, durch den der Sicherungsring in der radial vorgespannten Schließstellung gehalten wird. Durch den Sicherungsring wird dann sichergestellt, dass der am Fitting vorgesehene Anschlussvorsprung bei einer Drehung nicht über eine an der Radialnut vorgesehene Verriegelungsnase gelangt, wodurch ein ungewolltes Lösen der Steckverbindung verhindert werden kann. Allerdings muss bei der Montage einer derartigen Steckverbindung das Fitting zunächst eingesteckt und nach der Drehung wieder ein Stück herausgezogen werden, bevor der Sicherungsring angebracht und über den Rastverschluss fixiert werden kann.

Aufgabe der Erfindung ist es, eine gegen ungewolltes Lösen gesicherte Steckverbindung der eingangs genannten Art zu schaffen, die eine einfache Montage und Demontage ermöglicht.

Diese Aufgabe wird durch eine Steckverbindung mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Steckverbindung weist der Verriegelungsring an einer Unterseite mindestens einen Sicherungssteg zum formschlüssigen Eingriff in eine Aufnahmenut eines ersten Anschlussteils auf und ist biegsam, so dass der Sicherungssteg zwischen einer unteren Verriegelungsstellung und einer angehobenen Lösestellung bewegbar ist. Zudem wird die Bajonettverbindung durch zwei an der Außenseite eines Einsteckteils des zweiten Anschlussteils diametral gegenüberliegend angeordneten Verriegelungsnocken und zwei dazugehörigen radialen Verriegelungsnuten an der Innenseite einer Aufnahmeöffnung des ersten Anschlussteils gebildet. Der Verriegelungsring kann vor der Verbindung der beiden Teile auf das zweite Anschlussteil aufgesteckt und durch Biegung bzw. Drehung so positioniert werden, dass ein Zusammenstecken der beiden Anschlussteile möglich ist. Wenn das zweite Anschlussteil nach dem Einstecken in das erste Anschlussteil zur Verriegelung gedreht wird, schnappt der Sicherungssteg am Verriegelungsring automatisch in die Verriegelungsstellung und wird in dieser Stellung durch das Halteelement fixiert.

In einer bevorzugten Ausführung weist der Sicherungssteg auf der einen Seite eine Anlagefläche zur Anlage an einer Seitenfläche der Aufnahmenut und an der anderen Seite eine untere Haltenase zum verrastenden Eingriff in eine Vertiefung an der Unterseite der Aufnahmenut auf.

Um die Sicherungsstege einfacher anzuheben, können an der Außenseite des Verriegelungsrings im Bereich der Sicherungsstege nach außen vorstehende Haltelaschen vorgesehen sein.

Das dem Sicherungssteg zugeordnete Halteelement ist zur Anlage auf der Oberseite des Verriegelungsrings ausgebildet und ist vorzugsweise an der Unterseite eines Außenteils des zweiten Anschlussteils angeordnet.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Steckverbindung mit einem muffenförmigen ersten Anschlussteil, einem rohrförmigen zweiten Anschlussteil und einem Verriegelungsring;
- **Figur 2**: eine zum Teil geschnittene Seitenansicht der Steckverbindung in einer verriegelten Stellung;
- **Figur 3**: eine zum Teil geschnittene Seitenansicht der Steckverbindung in einer entriegelten Stellung und
- **Figur 4**: den Veniegelungsring in einer Perspektive.

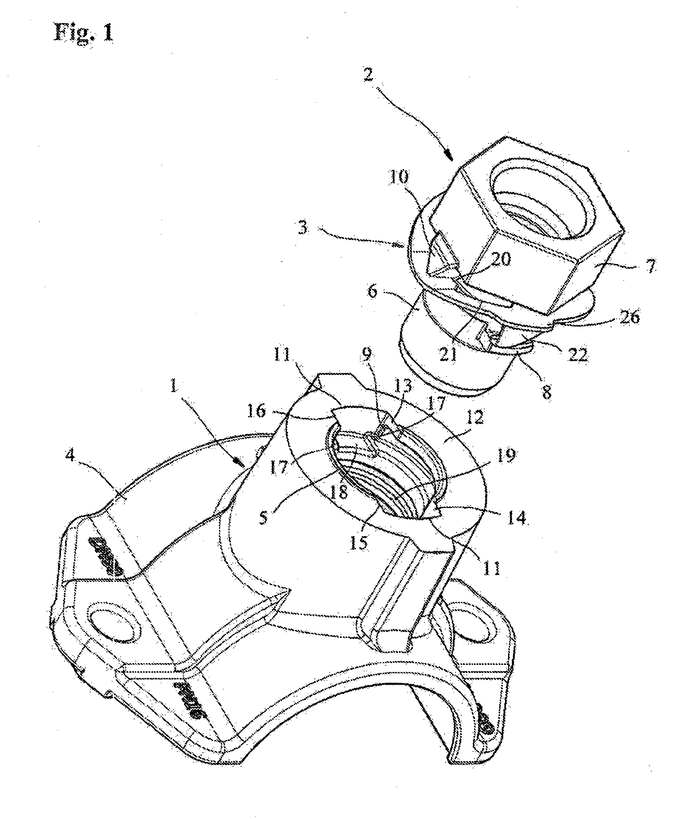

In Figur 1 ist eine verriegelbare Steckverbindung mit einem muffenförmigen ersten Anschlussteil 1, einem rohrförmigen zweiten Anschlussteil 2 und einem Verriegelungsring 3 gezeigt. Bei der dargestellten Ausführung ist das muffenförmige erste Anschlussteil 1 an einer Anschlussbrücke 4 zur Befestigung an einer Rohrleitung angeformt. Das muffenförmige Anschlussteil 1 kann aber auch an einem T-förmigen Verzweigungsstück oder an einem anderen Anschlusselement vorgesehen sein. Das rohrförmige zweite Anschlussteil 2 enthält ein als Spitzende ausgebildetes und in eine Aufnahmeöffnung 5 des ersten Anschlussteils 1 einsteckbares, rohrförmiges Einsteckteil 6 und ein hier mit einem Sechskantprofil versehenes Außenteil 7.

Das zweite Anschlussteil 2 und das erste Anschlussteil 1 sind über eine Bajonettverbindung lösbar miteinander verbindbar. Die Bajonettverbindung wird durch Verriegelungsnocken 8 an der Außenseite des zweiten Anschlussteils 2 und durch dazugehörige Verriegelungsnuten 9 an der Innenseite der Aufnahmeöffnung 5 des ersten Anschlussteils 1 gebildet. Bei der gezeigten Ausführungsform sind zwei diametral gegenüberliegende Verriegelungsnocken 8 an der Außenseite des rohrförmigen Einsteckteils 6 am zweiten Anschlussteil 2 angeformt. Von der Unterseite des hier mit einem Sechskantprofil versehenen Außenteils 7 stehen zwei in Umfangsrichtung um 90° zu den Verriegelungsnocken 8 versetzte, nach unten ragende keilförmige Halteelemente 10 zur Anlage auf der Oberseite des Verriegelungsrings 3 vor.

An der Aufnahmeöffnung 5 des ersten Anschlussteils 1 sind zwei diametral gegenüberliegende Aufnahmenuten 11 zur Aufnahme der Verreiegelungsnocken 8 beim Zusammenstecken der beiden Anschlussteile 1 und 2 vorgehen. An der Innenseite der Aufnahmeöffnung 5 befinden sich außerdem die zwei in Umfangsrichtung verlaufende Verriegelungsnuten 9, in welche die Verriegelungsnocken 8 nach dem Zusammenstecken der Anschlussteile 1 und 2 und der anschließenden Drehung des Anschlussteils 2 gegenüber dem Anschlussteil 1 eingreifen.

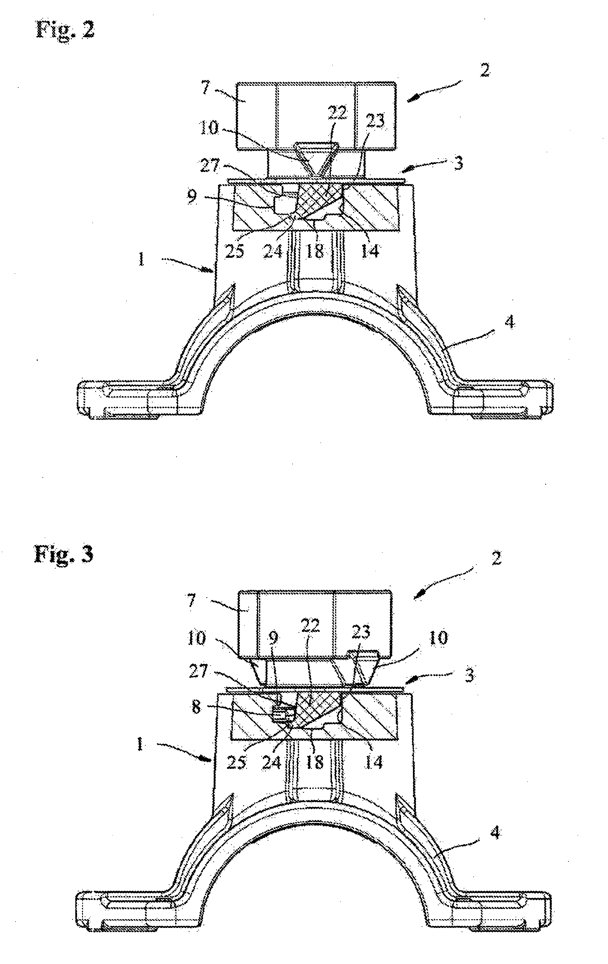

Die beiden Aufnahmenuten 11 erstrecken sich in Axialrichtung des ersten Anschlussteils 1 von einer äußeren Stirnfläche 12 nach innen, während die beiden Verriegelungsnuten 9 an der Innenseite der Aufnahmeöffnung in Umfangsrichtung parallel zur äußeren Stirnfläche 12 nach innen versetzt von jeweils einer Aufnahmenut 11 bis zu einen nicht dargestellten Anschlag verlaufen. Die beiden Verriegelungsnuten 9 verlaufen also nicht durchgehend von der einen bis zur anderen Aufnahmenut 11, sondern enden jeweils an einem Anschlag. Bei der in Figur 1 gezeigten Ausführung verläuft die rechte Verriegelungsnut 9 von der rechten Seitenfläche 13 der oberen Aufnahmenut 11 bis zum einem Anschlag vor der rechten Seitenfläche 14 der unteren Aufnahmenut 11, während sich die in Figur 2 erkennbare linke Verriegelungsnut 9 von der linken Seitenfläche 15 der in Figur 1 unteren Aufnahmenut 11 bis zum einem Anschlag vor der rechten Seitenfläche 16 der oberen Aufnahmenut 11 erstreckt.

Die Verriegelungsnuten 9 sind derart ausgeführt, dass das rohrförmige zweite Anschlussteil 2 nach dem Einstecken des als Spitzende ausgebildeten rohrförmigen Einsteckteil 6 in die Aufnahmeöffnung 5 des muffenförmigen ersten Anschlussteils 1 um 90° gedreht werden kann, wobei die Verriegelungsnocken 8 zum Eingriff in die in Umfangsrichtung verlaufenden Verriegelungsnuten 9 gelangen. Die Drehung des rohrförmigen zweiten Anschlussteils 2 wird durch die in den Verriegelungsnuten 9 vorgesehenen Anschläge begrenzt, an denen die Verriegelungsnocken 9 zur Anlage kommen. Die Aufnahmenuten 11 weisen an ihrem inneren Ende mit der Unterseite der Verriegelungsnuten fluchtende Anschlagflächen 17 und eine Vertiefung 18 gegenüber der Anschlagfläche 17 auf. Die Vertiefungen 18 haben eine geringere Breite als die Verriegelungsnocken 8, so dass die Verriegelungsnocken 8 beim Zusammenstecken des rohrförmigen Anschlussteils 2 mit dem muffenförmigen Anschlussteil 1 zur Anlage auf den Anschlagflächen 17 gelangen. Unterhalb der Verriegelungsnuten 9 ist an der Innenseite der Aufnahmeöffnung 5 des muffenförmigen ersten Anschlussteils 1 ferner eine innerhalb einer Radialnut angeordnete Radialdichtung 19 zur Abdichtung des rohrförmigen Einsteckteils 6 innerhalb des Anschlussteils 1 vorgesehen.

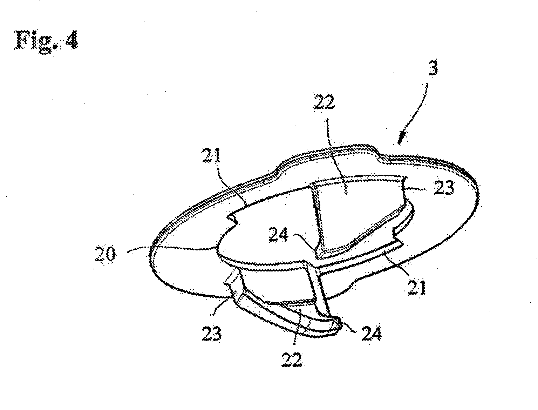

Der in Figur 4 gesondert dargestellte Verriegelungsring 3 enthält eine an den Durchmesser des rohrförmigen Einsteckteils 6 zum Durchstecken angepasste Durchgangsöffnung 20 mit zwei diametral gegenüberliegenden Aussparungen 21. Die Aussparungen 21 sind derart ausgebildet, dass die Verriegelungsnocken 8 hindurchpassen. An der Unterseite des Verriegelungsrings 3 sind neben den Aussparungen 21 zwei nach unten vorstehende diametral gegenüberliegende klauenförmige Sicherungsstege 22 angeformt. Die Sicherungsstege 22 weisen auf der einen Seite eine Anlagefläche 23 zur Anlage an den Seitenflächen 14 und 16 der Aufnahmenuten 11 und auf der anderen Seite eine untere Haltenase 24 zum Eingriff in die Vertiefung 18 und zur Anlage an einer in den Figuren 2 und 3 gezeigten Rastkante 25 an den Vertiefungen 18 auf. Der biegsame Verriegelungsring 3 kann aus einem elastischen Werkstoff z.B. einem Elastomer, einem Plastomer oder aus Metallblech hergestellt sein.

Im Folgenden wird die Montage und Demontage der vorstehend beschriebenen Steckverbindung anhand der Figuren 1 bis 3 erläutert.

Bevor das zweite Anschlussteil 2 mit seinem rohrförmigen Einsteckteil 6 in die Aufnahmeöffnung 5 des ersten Anschlussteils 1 eingeführt werden kann, muss der Verriegelungsring 3 in die gemäß Figur 1 dargestellte Einbauposition gebracht werden. Hierzu wird der elastisch deformierbare Verriegelungsring 3 mit seiner Durchgangsöffnung 20 auf das als Spitzende ausgebildete rohrförmige Einsteckteil 5 zunächst in einer Stellung aufgesetzt, in der die Aussparungen 21 im Verriegelungsring 3 mit den Verriegelungsnocken 8 an der Außenseite des zweiten Anschlussteils 2 ausgerichtet sind. Anschließend werden die Sicherungsstege 22 durch entsprechende Verformung des elastisch deformierbaren Verriegelungsrings 3 nach oben gebogen und der Verriegelungsring 3 so gedreht, dass die Sicherungsstege 22 in Einschubrichtung des Einsteckteils 6 hinter die Verriegelungsnocken 8 gelangen, wie dies in Figur 1 gezeigt ist. Zur Erleichterung der Biegung des Verriegelungsrings 3 können an dessen Außenseite im Bereich der Sicherungsstege 22 radial nach außen vorstehende Grifflaschen 26 angeformt sein, wie dies in Figur 1 gezeigt ist. Durch elastische Vorspannung wird der Verriegelungsring 3 in der Stellung von Figur 1 während des Zusammensteckens von ersten und zweiten Anschussteil 1 bzw. 2 fixiert.

Anschließend kann das als Spitzende ausgeführte rohrförmige Einsteckteil 6 in die Aufnahmeöffnung 5 des muffenförmigen ersten Anschlussteils 1 geschoben werden, wobei darauf geachtet werden muss, dass die Verriegelungsnocken 8 zu den Aufnahmenuten 11 ausgerichtet sind. Das rohrförmige Einsteckteil 6 wird so weit in die Aufnahmeöffnung 5 des ersten Anschlussteils 1 hineingeschoben, bis die Verriegelungsnocken 8 auf den Anschlagflächen 17 am Grund der Aufnahmenuten 11 aufliegen. Dann kann das zweite Anschlussteil 2 im Uhrzeigersinn um 90° gedreht werden, bis die Verriegelungsnocken 8 innerhalb der Verriegelungsnuten 11 in eine Verriegelungsstellung und zur Anlage an den Anschlägen gelangen. Durch die Drehung der Verriegelungsnocken 8 in die Verriegelungsstellung werden die innerhalb der Aufnahmenuten 11 gehaltenen Sicherungsstege 22 an der Unterseite frei und können nach unten schnappen, wobei die Haltenasen 24 zur Anlage an den Rastkanten 25 der Vertiefungen 18 gelangen, wie dies in Figur 2 gezeigt ist. In der Verriegelungsstellung der Verriegelungsnocken 8 liegen die keilförmigen Halteelemente 10 direkt über den Sicherungsstegen 22, wodurch ein Anheben der Sicherungsstege 22 und dadurch ein Lösen der Steckverbindung verhindert wird.

Die Steckverbindung kann gewollt wieder gelöst werden, indem das zweite Anschlussteil 2 aus der in Figur 2 gezeigten Verriegelungsstellung entgegen dem Uhrzeigersinn gedreht wird. Dabei verlassen die keilförmigen Halteelemente 10 ihre Position über den Sicherungsstegen 22 des Verriegelungsrings 3. Der elastisch deformierbare Verriegelungsring 3 kann dann an den Grifflaschen 26 von Hand nach oben gebogen werden, wodurch die Sicherungsstege 22 aus einer unteren Verriegelungsstellung in eine angehobene Lösestellung bewegt werden und der Weg für die Verriegelungsnocken 8 frei wird. Das zweite Anschlussteil 2 kann dann entgegen dem Uhrzeigersinn bis zum Anschlag der Verriegelungsnocken 8 an den geschlossenen Seitenflächen 14 und 16 gedreht und anschließend aus der Aufnahmeöffnung 5 des ersten Anschlussteils 1 herausgezogen werden.

Ein ungewolltes Lösen der Steckverbindung wird durch die Zusammenwirkung der Sicherungsstege 22 mit der Haltenase 24 und den Vertiefungen 18 an den Aufnahmenuten 11 erreicht. Wird nämlich das zweite Anschlussteil 2 aus der in Figur 2 gezeigten Verriegelungsstellung entgegen dem Uhrzeigersinn gedreht, ohne den Verriegelungsring 3 an den Grifflaschen 26 nach oben zu ziehen, drehen sich die Verriegelungsnocken 8 gemäß Figur 3 über die Haltenasen 24 bis zum radialen Anschlag an eine oberhalb der Haltenasen 24 liegende Seitenfläche 27 der Sicherungsstege 22, wodurch die Sicherungsstege 22 in einer unteren Verriegelungsstellung gehalten werden und eine weitere Drehung der Verriegelungsnocken 8 und damit ein Lösen der Verbindung verhindert wird.

Die Erfindung ist nicht auf das vorstehend beschriebene und in der Zeichnung dargestellte Ausführungsbeispiel mit zwei diametral gegenüberliegenden Sicherungsstegen und zugehörigen Halteelementen beschränkt. So kann das zweite Anschlussteil z.B. auch nur ein Halteelement und der Sicherungsring entsprechend auch nur einen Sicherungssteg aufweisen.

## Patentansprüche

1. Steckverbindung mit einem ersten Anschlussteil (1), einem zweiten Anschlussteil (2), einer Bajonettverbindung (8, 9) zur lösbaren Verbindung des zweiten Anschlussteils (2) mit dem ersten Anschlussteil (1) und einem Verriegelungsring (3) zur axialen Sicherung des zweiten Anschlussteils (2) gegenüber dem ersten Anschlussteil (1), wobei der Verriegelungsring (3) mindestens einen Sicherungssteg (22) enthält, der durch ein an dem zweiten Anschlussteil (2) angeordnetes Halteelement (10) in einer Verriegelungsstellung innerhalb des ersten Anschlussteils (1) arretierbar ist, und die Bajonettverbindung (8, 9) durch zwei an der Außenseite eines Einsteckteils (6) des zweiten Anschlussteils (2) diametral gegenüberliegend angeordnete Verriegelungsnocken (8) und zwei dazugehörige radiale Verriegelungsnuten (9) an der Innenseite einer Aufnahmeöffnung (5) des ersten Anschlussteils (1) gebildet wird **dadurch gekennzeichnet, dass** der durch Biegung des Verriegelungsrings (3) zwischen der Verriegelungsstellung und einer angehobenen Lösestellung bewegbare Sicherungssteg (22) auf der einen Seite eine Anlagefläche (23) zur Anlage an einer Seitenfläche (14, 16) einer Aufnahmenut (11) des ersten Anschlussteils (1) und an der anderen Seite eine untere Haltenase (24) zum verrastenden Eingriff in eine Vertiefung (18) an der Unterseite der Aufnahmenut (11) enthält.

2. Steckverbindung nach Anspruch 1, **dadurch gekennzeichnet, dass** der Sicherungssteg (22) äußere Haltelaschen (26) zum Anheben des mindestens einen Sicherungsstegs (22) enthält.

3. Steckverbindung nach Anspruch 1 oder 2, **dadurch gekennzeichnet, dass** das Halteelement (10) zur Anlage auf der Oberseite des Verriegelungsrings (3) ausgebildet ist.

4. Steckverbindung nach einem der Ansprüche 1 bis 3, **dadurch gekennzeichnet, dass** das Halteelement (10) an der Unterseite eines Außenteils (7) des zweiten Anschlussteils (2) angeordnet ist.

5. Steckverbindung nach einem der Ansprüche 1 bis 4, **dadurch gekennzeichnet, dass** der Verriegelungsring (3) zwei diametral gegenüberliegende Sicherungsstege (22) und zwei Ausnehmungen (21) für die Verriegelungsnocken (8) enthält.

6. Steckverbindung nach Anspruch 5, **dadurch gekennzeichnet, dass** das zweite Anschlussteil (2) zwei in Umfangsrichtung um 90° zu den Verriegelungsnocken (8) versetzte Halteelemente (10) enthält.

7. Steckverbindung nach einem der Ansprüche 1 bis 6, **dadurch gekennzeichnet, dass** der elastisch verformbare Verriegelungsring (3) aus einem elastischen Kunststoff oder aus Metallblech besteht.

## Claims

1. Plug-in connection with a first connecting part (1), a second connecting part (2), a bayonet connection (8, 9) for detachable connection of the second connecting part (2) with the first connecting part (1) and a locking ring (3) for axial locking of the second connecting part (2) in relation to the first connecting part (1), wherein the locking ring (3) comprises at least one retaining member (22) which can be locked in a locking position inside the first connecting part (1) by a holding element (10) arranged on the second connecting part (2), and the bayonet connection (8, 9) is formed by two locking cams (8) arranged diametrically opposite one another on the outside of a plug-in part (6) of the second connecting part (2) and two associated radial locking grooves (9) on the inside of a receiving opening (5) of the first connecting part (1), **characterised in that** the retaining member (22) which can be moved between the locking position and a raised unlocking position by bending of the locking ring (3), comprises on one side a bearing face (23) for bearing on a side face (14, 16) of a receiving groove (11) of the first connecting part (1) and on the other side a lower holding nose (24) for locking engagement in a recess (18) in the underside of the receiving groove (11).

2. Plug-in connection according to claim 1, **characterised in that** the retaining member (22) comprises external holding tabs (26) for lifting the at least one retaining member (22).

3. Plug-in connection according to claim 1 or 2, **characterised in that** the holding element (10) is designed so as to bear on the upper side of the locking ring (3).

4. Plug-in connection according to one of claims 1 to 3, **characterised in that** the holding element (10) is arranged on the underside of a external part (7) of the second connecting part (2).

5. Plug-in connection according to one of claims 1 to 4, **characterised in that** the locking ring (3) comprises two diametrically opposed retaining members (22) and two cut-outs (21) for the locking cams (8).

6. Plug-in connection according to claim 5, **characterised in that** the second connecting part (2) comprises two holding elements (10) offset at 90° to the locking cams (8) in the circumferential direction.

7. Plug-in connection according to one of claims 1 to 6, **characterised in that** the elastically deformable locking ring (3) is made of an elastic plastic or of sheet metal.

## Revendications

1. Connecteur à fiches comprenant une première partie de raccordement (1), une deuxième partie de raccordement (2), un système d'assemblage à baïonnette (8, 9) servant à assembler de manière amovible la deuxième partie de raccordement (2) à la première partie de raccordement (1) et comprenant une bague de verrouillage (3) servant à bloquer de manière axiale la deuxième partie de raccordement (2) par rapport à la première partie de raccordement (1), sachant que la bague de verrouillage (3) comporte au moins une entretoise de blocage (22) qui peut être stoppée par un élément de retenue (10) disposé au niveau de la deuxième partie de raccordement (2) dans une position de verrouillage à l'intérieur de la première partie de raccordement (1), et sachant que le système d'assemblage à baïonnette (8, 9) est formé par deux cames de verrouillage (8) disposées de manière diamétralement opposée au niveau du côté extérieur d'une partie à enficher (6) de la deuxième partie de raccordement (2) et par deux rainures de verrouillage (9) radiales associées au niveau du côté intérieur d'une ouverture de logement (5) de la première partie de raccordement (1), **caractérisé en ce que** l'entretoise de blocage (22), pouvant être déplacée par cintrage de la bague de verrouillage (3) entre la position de verrouillage et une position de déblocage relevée, comporte sur l'un des côtés une surface d'appui (23) destinée à venir en appui au niveau d'une face latérale (14, 16) d'une rainure de logement (11) de la première partie de raccordement (1), et au niveau de l'autre côté, un ergot de retenue (24) inférieur destiné à venir en prise par encliquetage avec un creux (18) au niveau du côté inférieur de la rainure de logement (11).

2. Connecteur à fiches selon la revendication 1, **caractérisé en ce que** l'entretoise de blocage (22) comporte des brides de retenue (26) extérieures servant à soulever l'entretoise de blocage (22) au moins au nombre de une.

3. Connecteur à fiches selon la revendication 1 ou 2, **caractérisé en ce que** l'élément de retenue (10) est réalisé pour venir en appui sur le côté supérieur de la bague de verrouillage (3).

4. Connecteur à fiches selon l'une quelconque des revendications 1 à 3, **caractérisé en ce que** l'élément de retenue (10) est disposé au niveau du côté inférieur d'une partie extérieure (7) de la deuxième partie de raccordement (2).

5. Connecteur à fiches selon l'une quelconque des revendications 1 à 4, **caractérisé en ce que** la bague de verrouillage (3) comporte deux entretoises de blocage (22) diamétralement opposées et deux évidements (21) pour les cames de verrouillage (8).

6. Connecteur à fiches selon la revendication 5, **caractérisé en ce que** la deuxième partie de raccordement (2) comporte deux éléments de retenue (10) décalés dans la direction périphérique de 90° par rapport aux cames de verrouillage (8).

7. Connecteur à fiches selon l'une quelconque des revendications 1 à 6, **caractérisé en ce que** la bague de verrouillage (3) élastiquement déformable est constituée d'une matière plastique élastique ou d'une tôle métallique.
